# EUROPÄISCHE PATENTSCHRIFT

(11) **EP 1 542 883 B1**
(45) Veröffentlichungstag und Bekanntmachung des Hinweises auf die Patenterteilung: **31.05.2006**
(21) Anmeldenummer: 03750578.1
(22) Anmeldetag: 18.09.2003
(51) Int. Cl.: B60W 10/10

(54) **VERFAHREN ZUR REGELUNG UND/ODER STEUERUNG EINER MOTOR-GETRIEBEEINHEIT IN EINEM KRAFTFAHRZEUG**
METHOD FOR THE REGULATION AND/OR CONTROL OF AN ENGINE GEARBOX UNIT IN A MOTOR VEHICLE
PROCEDE DE REGULATION ET/OU DE COMMANDE D'UNE UNITE MOTEUR/TRANSMISSION DANS UN VEHICULE

(30) Priorität: 25.09.2002 DE 10244519
(43) Veröffentlichungstag der Anmeldung: 22.06.2005
(73) Patentinhaber: Bayerische Motoren Werke Aktiengesellschaft, 80809 München (DE)
(72) Erfinder: WOLF, Lothar, D-83607 Holzkirchen (DE); KRENN, Helmut, D-85774 Unterföhring (DE); SCHUMACHER, Hubert, 86179 Augsburg (DE)
(86) Internationale Anmeldenummer: PCT/EP2003/010419
(87) Internationale Veröffentlichungsnummer: WO 2004/030974

(56) Entgegenhaltungen:
- WO-A-02/02366
- DE-A- 10 129 930
- DE-A- 19 648 055
- DE-A- 19 962 963
- US-A- 5 163 530
- US-A- 6 151 542
- US-B1- 6 339 739

## Beschreibung

Die vorliegende Erfindung betrifft ein Verfahren und eine Vorrichtung zur Steuerung und/oder Regelung einer Motor-Getriebeeinheit in einem Kraftfahrzeug. Derartige Verfahren und Vorrichtungen sind in Kraftfahrzeugen dazu vorgesehen, um eine konkrete Momentenanforderung an Antriebsrädern des Kraftfahrzeuges durch eine Regelung von Sollwerten an einer Brennkraftmaschine und/oder einer Übersetzung eines Getriebes zu realisieren. Sie greifen also in der Regel an zwei Punkten in eine Motor-Getriebeeinheit ein, um einen Drehzahl- und Drehmomentbereich eines Verbrennungsmotors in einer bestimmten Weise auf den Drehzahl- und Drehmomentbereich an den Antriebsrädern des Kraftfahrzeuges einer gegebenen Anforderung entsprechend abzubilden. Dabei sind u.a. Drehzahl-Drehmoment-Kennlinien der beteiligten Einheiten separat zu berücksichtigen. Beispielsweise ist ein derartiges Verfahren aus der DE 101 29 930 A1 bekannt.

Nach dem Stand der Technik wird eine Momentenanforderung durch einen jeweiligen Fahrer des Kraftfahrzeuges bestimmt, in der Regel durch die Stellung eines Fahrpedals oder eines sonstigen Eingabemittels. Zur konkreten Umsetzung einer derartigen Momentenanforderung sind aus dem Bereich des Automatikgetriebe für Kraftfahrzeuge mit Verbrennungsmotoren verschiedene Lösungsvorschläge bekannt. In der DE 199 40 703 C1 ist beispielsweise ein Verfahren und eine entsprechende Vorrichtung zur kontinuierlichen Einstellung jedes gewünschten Radmomentes bei einem Stufenautomatikgetriebe offenbart. In der DE 199 61 312 C1 wird für ein stufenloses Automatikgetriebe je nach Fahrsituation und Fahrerwunsch ein Motor-Drehmoment-Drehzahl Paar als Arbeitspunkt aus einem gespeicherten Kennlinienfeld bestimmt. Dieser Arbeitspunkt wird als Schnittpunkt der Kennlinie mit einer Leistungsbedarfshyperbel für diesen Motor unter Berücksichtigung von anhand von Modellen bestimmten Verlusten entnommen. Als relevante Kriterien für die Bestimmung bzw. Auswahl eines Motor-Arbeitspunktes als Drehmoment-Drehzahl Paar können Umwelt- und Fahrsituation sowie Fahrbarkeit, motorseitiger Gesamtwirkungsgrad, Akustik und Fahrcharakteristik eingehen. Dabei wird aber nur eine Vorgabe durch den Fahrer als Anforderung umgesetzt, wie auch bei allen sonstigen Verfahren und Vorrichtungen nach dem Stand der Technik.

Unabhängig von der Form eines jeweiligen Getriebes und der Art des Antriebsmotors ist neben einer Anforderung durch den Fahrer selber für jede mögliche Momentenanforderung mindestens eines externen Systems in einer elektronischen Steuereinheit eigens eine Schnittstelle vorgesehen, bei der die zu realisierende Momentenanforderungen eingeht. In der Steuereinrichtung wird an einer entsprechenden Stelle in einer Momentenstruktur, je nach Art und Dynamik der Anforderung, anschließend durch Minimal- bzw. Maximalauswahl darüber entschieden, welches der angeforderten Momente realisiert wird. Der Übergang von einer Anforderung zu einer anderen, z.B. bei Hinzunahme oder Wegfall einer der Anforderungen, erfolgt über ein Filter, der bestimmte Übergangsgradienten festlegt. Ohne Übergangsgradienten erfolgt der Übergang nach festgesetzten Momentenaufbau- bzw. Momentenreduktionskriterien, die fest in der Steuerung und/oder Regelung der Brennkraftmaschine definiert sind.

Die Nachteile dieser Ausführung bestehen im Wesentlichen darin, dass für jede Momentenanforderung in der Steuerung und/oder Regelung eine eigene Schnittstelle bereitgestellt werden muss und eine Priorisierung, also die Festlegung welche der Anforderungen schließlich eingestellt bzw. realisiert wird, durch die Maximal- oder Minimalauswahl in unterschiedlichen Ebenen fest codiert ist. Darüber hinaus wird der Übergang zwischen unterschiedlichen Anforderungen in den Grenzen und Vorgaben eines fest codierten Reglers realisiert. Durch die zunehmende Komplexität der Gesamtsysteme in modernen Kraftfahrzeugen stößt der Entwicklungsaufwand vorstehend beschriebener Vorrichtungen bei zusätzlichen Erweiterungen und/oder Anpassungen an bestehende Realisierungen an die Grenzen des Beherrschbaren. Es ist hier ein hoher Abstimmungsaufwand erforderlich, um bei Hinzunahme einer neuen Schnittstelle deren Anforderungen mit denen bereits vorhandener Anforderer und einem sicheren Betrieb der Brennkraftmaschine in einer Vorrichtung zu koordinieren.

Es ist daher die Aufgabe der vorliegenden Erfindung, ein Verfahren und eine Vorrichtung der eingangs genannten Art zu schaffen, das mit vertretbarem Aufwand flexibel und sicher erweitert und an eine einstellbare Anzahl von Anforderern angepasst werden kann.

Diese Aufgabe wird erfindungsgemäß durch ein Verfahren mit den Merkmalen von Anspruch 1 gelöst. Weiter ist eine Vorrichtung mit den Merkmalen von Anspruch 13 eine Lösung dieser Aufgabe. Vorteilhafte Weiterbildungen sind in den jeweiligen Unteransprüchen gekennzeichnet.

Ein erfindungsgemäßes Verfahren zeichnet sich demnach dadurch aus, dass eine Berechnung einer aus einer vorgegebenen Anzahl von Anforderern jeweils umzusetzenden Momentvorgabe, die an eine elektronische Steuerung einer Antriebsmaschine und/oder einer Getriebeeinheit gerichtet wird, in einer getrennten, und der Steuerung übergeordneten Funktionseinheit durchgeführt wird. Dieses Verfahren ermöglicht es, verschiedenste zu realisierende Momentenanforderungen an die Steuereinheit eines Antriebsaggregates bzw. einer Motor-Getriebeeinheit nach physikalischen und empirischen Gesichtspunkten zu bewerten und entsprechend eine zu stellende Momentenanforderung an die elektronische Antriebssteuereinheit zu richten. In der Steuerung des Antriebsaggregates muss für das von dem Antriebsaggregat zu stellende Moment so nur noch eine Schnittstelle definiert und entsprechend koordiniert werden. Diese Koordination muss dabei den dynamischen Anforderungen der einzelnen Momentenanforderungen genügen. Die gesamte Koordinierung externer Momentenanforderungen erfolgt in der nachfolgend als Master bezeichneten übergeordneten Funktionseinheit und wird demnach letztlich über eine einzige Anforderung in der Motor-Getriebeeinheit bzw. dem Antriebsaggregat bewerkstelligt. Alle bekannten Regel- und Stellverfahren und entsprechende Vorrichtungen für die verschiedenen Antriebsaggregate können hier nahtlos angeschlossen werden, teilweise unter der Vereinfachung, dass nur noch eine Anforderung umzusetzen ist. Dabei können hier alle Arten und Bauformen von Motoren und Getriebeeinheiten eingesetzt werden, so zum Beispiel Brennkraft-, Hydraulik- oder Pneumatikantriebe genauso wie Akkumulator-gespeiste Elektromotoren oder Hybridantriebe. Als Getriebeeinheiten sind neben CVT- oder IVT-Automatikgetrieben auch Stufen-Schaltgetriebe einsetzbar.

In einer bevorzugten Ausführungsform der Erfindung erfolgt die Realisierung eines solchen Masters als übergeordnete Funktionseinheit in drei Stufen mit einer vorangestellten Berücksichtigung externer Momentenanforderungen sowie Berücksichtigung von mehreren Momentenanforderungen, die sich aufgrund verschiedener Umwelt- und Fahrsituationen ergeben, nachfolgender Aufarbeitung der externen und internen Momentenanforderungen in Radmomente sowie schließlich einer Priorisierung der Anforderungen und der Ausgabe einer Momentenanforderung bzw. Momentenvorgabe an die elektronische Steuerung der Antriebsmaschine und/oder der Getriebeeinheit.

In einer vorteilhaften Ausführungsform der Erfindung wird während laufender Regelvorgänge zwischen dem Auftreten eines Prioritätenwechsels und einem Fortschreiten des jeweiligen Regelvorganges ohne Prioritätenwechsel unterschieden. Im Fall eines Prioritätenwechsels wird ein besonderes Verfahren zur Realisierung derartiger Übergänge angewendet, das an einen Ausführungsbeispiel nachfolgend in der Beschreibung unter Bezug auf die Zeichnung beispielhaft näher erläutert wird. Vorzugsweise wird im Fall eines Prioritätenwechsels ein stetiger Übergang in der Momentenvorgabe gewählt, der abhängig von einer jeweils zur Verfügung stehenden Zeit und einer jeweiligen Differenz der Niveaus des alten und des neuen Vorgabe-Moments bestimmt wird. In einer Ausführungsform ist in einer Matrix zur Ausgabe einer für einen Übergang einer prioritären Anforderung applizierbare Zeit und/oder eine jeweilige Kurvenform vorgesehen.

Insgesamt wird zur Umsetzung eines Verfahrens nach einem oder mehreren der vorstehend aufgeführten Merkmale eine Vorrichtung geschaffen, bei der bei Aufwand flexibel eine Anzahl von Anforderern sicher erweitert und auch hinsichtlich ihrer Optionen angepasst werden kann. Durch die Definition von angepassten Übergangsfunktionen wird in einer Weiterbildung der Erfindung im Fall eines Prioritätsüberganges zudem in jedem Fall sichergestellt, dass eine stetige und auf die physikalischen Eigenschaften des nachfolgenden elektromechanischen Gesamtsystems abgestimmte Anpassung einer Momentenvorgabe erfolgt. Vorteilhafterweise wird insgesamt eine Vereinfachung einer Gesamtsteuerung unabhängig von der Art der Motor-Getriebeeinheit und der Anzahl der Momentenanforderer erreicht.

Zur Darstellung weiterer Vorteile wird nachfolgend eine Ausführungsform der Erfindung anhand der Zeichnung beispielhaft näher beschrieben. In der Zeichnung zeigen:
- Figur 1:: eine schematische Darstellung einer erfindungsgemäßen Ausführungsform eines prinzipiellen Aufbaus einer Steuer- und Regeleinrichtung mit einer übergeordneten Funktionseinheit und einer Vielzahl von Momenten-Anforderem;
- Figur 2:: eine erste Stufe eines in einer übergeordneten Funktionseinheit ablaufenden Prozesses;
- Figur 3:: eine zweite Stufe des Prozesses von Figur 2 mit einer in der übergeordneten Funktionseinheit ablaufenden Berechnung;
- Figuren 4a, 4b:: je ein Ablaufschema für eine Berechnung ohne und mit einem Wechsel einer prioritären Momentenvorgabe;
- Figur 5:: eine schematische Darstellung am Beispiel der für eine Winterfunktionalität ablaufenden Berechnungsschritte;
- Figur 6:: eine systemspezifische Wintererkennung in schematischer Darstellung und
- Figur 7:: ein Schema eines zeitlichen Ablaufs bei einer Ausführung der Wintererkennung.

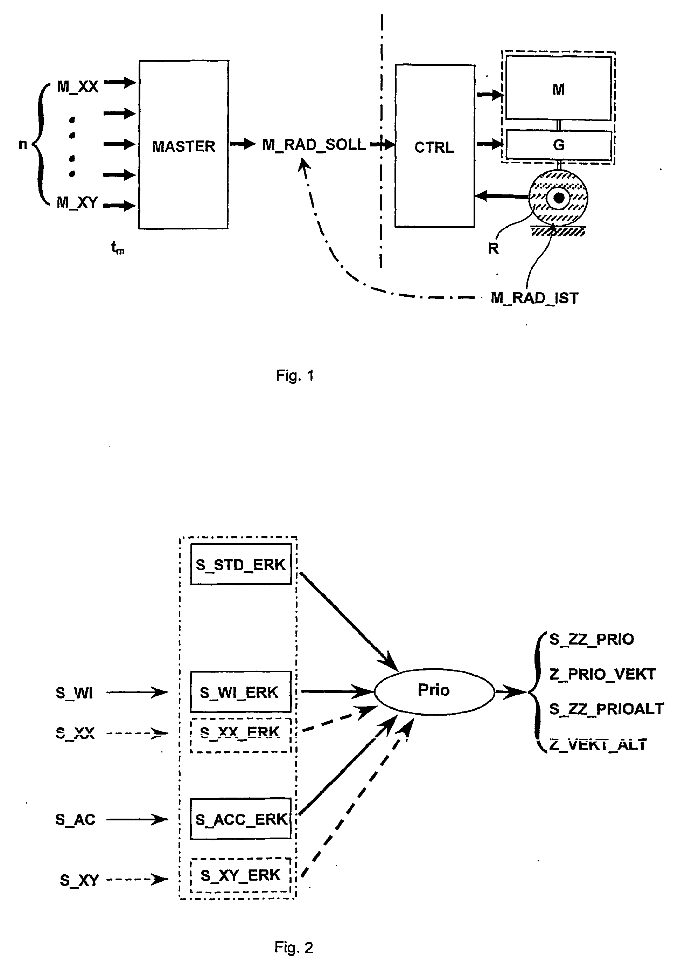

In der Abbildung von Figur 1 ist der prinzipielle Aufbau einer Ausführungsform einer Steuer- und Regeleinrichtung für die elektronische Steuerung einer brennkraftgetriebenen Antriebsmaschine M und/oder einer Getriebeeinheit G dargestellt, durch die eine Momentenvorgabe aus Eingabewerten einer größeren Anzahl von n externen Anforderern M_XX, ..., M_XY bestimmt wird. In eine separaten, übergeordneten Funktionseinheit, die hier als MASTER bezeichnet ist, werden die n Eingabewerte der n externen Anforderer M_XX, ..., M_XY eingegeben und zu einem einzigen angeforderten Moment M_RAD_SOLL verarbeitet. Über eine definierte Schnittstelle wird das angeforderte Moment M_RAD_SOLL an eine Steuerung CTRL als eigentlichen Momentensteller weitergegeben. Die Steuerung CTRL bildet dann in an sich bekannter Weise eine Regelschleife mit der Antriebsmaschine M und/oder der Getriebeeinheit G und hier beispielsweise einem nicht weiter dargestellten Momentensensor an einem angetriebenen Fahrzeugrad R des betreffenden Kraftfahrzeugs.

Diese Maßnahme ermöglicht es verschiedenste zu realisierende Momentenanforderungen an die Steuereinheit des Antriebsaggregates nach physikalischen und empirischen Gesichtspunkten zu bewerten und dementsprechend eine zu stellende Momentenanforderung M_RAD_SOLL an die elektronische Antriebssteuereinheit zu richten. In der Steuerung der Antriebsmaschine muss daher nur noch eine Schnittstelle für das von dem Antriebsaggregat zu stellende Moment definiert und entsprechend koordiniert werden. Diese Koordination muss dazu in dem Fachmann bekannter Weise den dynamischen Anforderungen tₘ der einzelnen Momentenanforderungen genügen. Die gesamte Koordinierung n externer Momentenanforderungen erfolgt im MASTER und wird letztlich über eine einzige Anforderung an die Motor-Getriebe-Einheit M, G gestellt. Um ein von dem Fahrer gewünschtes Antriebsmoment zu realisieren ist in der DE 199 40 703 C1 ein Verfahren vorgeschlagen worden, in dem die Momentenanforderung mit einer Vorgabe M_RAD_SOLL für ein Rad-Abtriebsmoment unter Verwendung von Modellen zurückgerechnet wird. Dieses Regelungsverfahren wird in der Abbildung von Figur 1 in Kombination mit einem erfindungsgemäßen Verfahren angewendet, wie mit dem gestrichelten Pfeil angedeutet.

Die hier berücksichtigte Anzahl n einzelner Anforderungen setzt sich vorteilhafterweise aus zwei unterschiedlichen Gruppen zusammen. Eine erste Gruppe bilden Anforderungen anderer fahrzeug-interner Systeme S_XY, wie beispielsweise einer Geschwindigkeitskontrolle bzw. Active Cruise Controll ACC, einer Anti-Schlupf-Regelung ASR, oder ähnlicher Systeme. Die zweite Gruppe von Anforderungen, die auf Fahr- und Umweltsituationen S_XX basieren, wie beispielsweise eine Wintererkennung WI. Beide Gruppen werden jedoch in gleicher Weise behandelt und nachfolgend im MASTER nach einem erfindungsgemäßen Verfahren in drei Stufen verarbeitet:

Die erste Stufe, schematisch in der Abbildung von Figur 2 dargestellt, dient dazu aus den verschiedenen erkannten Fahrsituationen, hier durch S_XX bezeichnet und durch das konkrete Beispiel einer Wintererkennung S_WI repräsentiert, oder erkannten Momentenanforderungen anderer Systeme S_XY, wie hier zum Beispiel eine Momentenanforderung einer Geschwindigkeitskontrolle bzw. Active Cruise Controll S_ACC, diejenige herauszufinden, die sich durchsetzen soll, um letztlich die Momentenanforderung an die Antriebssteuereinheit zu bestimmen. Dazu werden sog. Erkanntflags der entsprechenden Fahrsituationen oder anderer, ebenfalls Momenten anfordernder Systeme S_XX bzw. S_XY durch eine Priorisierungsstufe PRIO derart gefiltert, dass sich letztlich eine Situation S_ZZ_PRIO durchsetzt und entsprechend in einem Zustandsmerker Z_PRIO_VEKT vermerkt wird. Gleichzeitig wird ein entsprechender Prioritätszustand S_ZZ_PRIO_ALT der Historie in Z_VEKT_ALT abgespeichert, um später einen Wechsel in der Priorisierung erkennen zu können. Auf die Strategie der Priorisierung soll nicht weiter eingegangen werden.

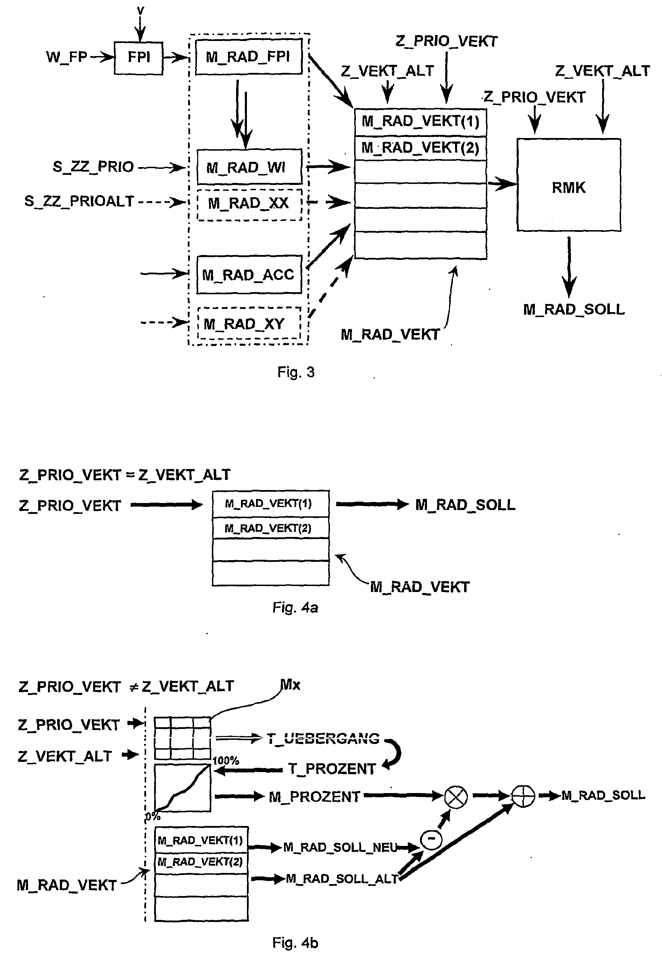

In der zweiten Stufe der in der Funktionseinheit MASTER ablaufenden Berechnungen, die in der Abbildung von Figur 3 skizziert dargestellt ist, werden die für die Realisierung der jeweiligen Momentenanforderungen S_XX, ..., S_XY benötigten Radmomenten M_Rad_XX, ..., M_RAD_XY bearbeitet bzw. berechnet. Dies erfolgt hier auf verschiedene Weise, wobei man grundsätzlich zwei Arten der Berechnung unterscheiden kann: Bei einer Fahrsituations- oder Umweltsituationserkennung S_XX, wie nachfolgend noch beispielsweise an einer Wintererkennung S_WI erläutert, kann ein aus einer Momenteninterpretation des Fahrpedals W_FP stammender und in Abhängigkeit einer aktuellen Fahrzeuggeschwindigkeit v durch eine Einheit FPI bestimmter Basiswert der Momentenanforderung M_RAD_FPI in vorgegebener Weise zur Anpassung auf winterliche Straßenverhältnisse manipuliert bzw. abgeändert werden. Daraus entsteht ein für eine Winterfunktion modifizierter Radmomentenwunsch M_RAD_WI. Die andere Art der Berechnung tritt im Falle einer Momentenanforderung S_XY eines anderen Systems an die Antriebseinheit auf, hier am Beispiel einer erkannten Situation und entsprechenden Momentenanforderung des ACC Systems S_ACC_PRIO in Form eines Radmomentenwunsches M_RAD_ACC angedeutet. Im Fall der Priorisierung dieses Radmomentenwunsches M_RAD_ACC wird ebenfalls eine Änderung an dem anhand der Fahrpedalinterpretation erkannten Fahrerwunsch vorgenommen werden, aber in einer gegenüber einer Wintererkennung anderen Form.

Im Anschluss sind die Radmomentenwünsche M_RAD_XX,..., M_RAD_XY aller n Anforderer bestimmt und liegen in einem Vektor M_RAD_VEKT zusammengestellt zur weiteren Verarbeitung vorbereitet vor. In die anschließende Berechnung gehen zwei Arten von zu realisierenden Radmomentenwünsche ein. Dies ist zum einen das Radmoment Z_PRIO_VEKT, das aktuell durch die Priorisierung in dem Verfahrensschritt gemäß Figur 2 bestimmt worden ist und wirksam sein soll; zum anderen ist es das Moment Z_VEKT_ALT, das zur letzten Priorisierung gehörig ist. Es wird nachfolgend weiter benötigt, um u.a. den Momentenübergang bei Prioritätsänderung gestalten zu können. Die entsprechenden Werte werden für die weitere Verarbeitung jeweils aktualisiert an die entsprechende Stellen von Z_PRIO_VEKT bzw. Z_VEKT_ALT in dem Radmomentenvektor M_RAD_VEKT eingetragen, um sie dort jederzeit abfragen zu können.

In einer dritten Stufe erfolgt nun in einem Radmomentenknoten RMK die Berechnung von M_RAD_S als dem Wert, der letztlich an die Antriebsaggregatssteuerung als zu stellendes bzw. umzusetzendes Wunschmoment weitergegeben wird. Hierbei wird zwischen einer Situation ohne Wechsel und einer Situation mit einem Wechsel in der Prioritätenvorgabe unterschieden. Die Vorgehensweise für den erstgenannten Fall wird anhand Abbildung von Figur 4a erläutert: Außerhalb eines Wechsels in der Prioritätenvorgabe wird mit Hilfe des Radmomentenwunsches Z_PRIO_VEKT dem Wert, der die aktive bzw. priorisierte Funktion kennzeichnet, im Radmomentenvektor M_RAD_VEKT der entsprechende Momentenwert nachgeschlagen, unverändert auf den Wert M_RAD_S kopiert und an die Antriebsmaschine als zu stellende Momentengröße ausgegeben. Steht ein Prioritätenwechsel an, wird also erkannt, dass Z_PRIO_VEKT und Z_PRIO_VEKTALT nicht übereinstimmen kommt es zu einem Übergang in der Momentenvorgabe.

Im Folgenden wird ein Verfahren zur Realisierung solcher Übergänge anhand der Abbildung von Figur 4b erläutert: Bei Erkennung eines Übergangs wird mit dem neuen Prioritätenwert Z_PRIO_VEKT und dem Altwert Z_PRIO_ALT in einer Matrix Mx eine für den speziellen Übergang applizierbare Zeit T_UEBERGANG nachgeschlagen, innerhalb der ein Übergang von der alten auf die neue Momentenvorgabe abgeschlossen werden soll. Mit dieser Zeit T_UEBERGANG kann ein zu jedem Zeitpunkt des Übergangs abgelaufener prozentualer Zeitanteil T_PROZENT bestimmt werden. Dieser verläuft linear mit der Zeit des Übergangs. Mit diesem Prozentsatz T_PROZENT der bereits verstrichenen Zeit des Übergangs wird in einer für jeden Übergang einstellbaren Kennlinie der zu der prozentual abgelaufenen Zeit des Übergangs dazugehörige prozentuale Momentenübergang M_PROZENT nachgeschlagen. Dies Kennlinien stellen eine Abbildung von 0...1 auf 0...1 dar, und ihre Form kann frei gewählt werden. Möglich ist an dieser Stelle auch ein anderes Verfahren, bei dem auf die gleiche Weise wie die Zeit in einer Übergangsmatrix ein Wert nachgeschlagen wird, der einen bestimmten Übergang charakterisiert. Damit können frei applizierbare typische Übergänge nachgeschlagen werden, insbesondere in Abhängigkeit einer erkannten und priorisierten Situation. Dabei kann gegenüber der zuerst beschriebenen Methode zusätzlich noch Speicherplatz gespart werden.

Die Berechnung von M_RAD_S erfolgt schließlich, wie in Abbildungen der Figur 4b dargestellt, durch Bewertung der Radmomentendifferenz zwischen altem und neuem Zustand mit dem prozentual abgelaufenen Momentenanteil M_PROZENT und Addition zum Altwert. Ist die Zeit T_UEBERGANG abgelaufen, so ist auf den aktuellen Wert M_RAD_SOLL NEU übergegangen worden. Der Übergang wird als beendet bezeichnet. Wird ein Prioritätenwechsel während einem laufenden Übergang von der Prioritätensteuerung vorgegeben, befindet sich das System zwischen zwei Momentenniveaus. Die noch nicht abgebaute Momentendifferenz zwischen den beiden letzten Radmomentenanforderungen wird dem nun wirksamen Altwert des Moments hinzugezählt, wobei ein aktueller Radmomentenwert als Altwert eingesetzt und über die neue Übergangszeit abgebaut wird. Damit ist für jede mögliche Situation ein stetiger Momentenverlauf garantiert. Ist die für den Prioritätenwechsel vorgesehene Übergangszeit kleiner als eine Taskzeit, in der im Steuergerät die Funktionalität gerechnet wird, kann der Wechsel gemäß der Prioritätenvorgabe unverzüglich erfolgen.

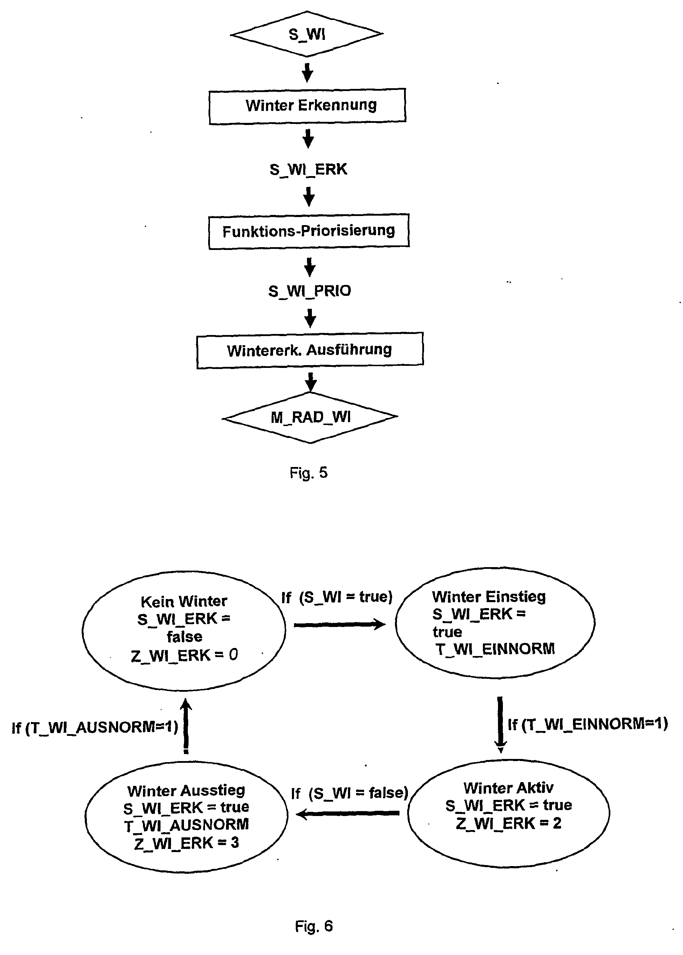

Eine vereinfachte Ausführung für lediglich zwei Momentenanforderer soll am Beispiel einer Winterfunktionalität dargestellt werden. Diese Funktionalität kann unabhängig von einer Winterfunktion in gleicher Weise allgemein überall da eingesetzt werden, wo die Vorgabe einer Wirkgröße abhängig von einem externen Triggersignal kontrolliert beeinflusst werden soll. Die Beeinflussung eines normal wirksamen Standartwertes kann sowohl positiv als auch negativ erfolgen. Die Abbildung von Figur 5 zeigt schematisch die für diese Vereinfachung ablaufenden Berechnungsschritte. Abhängig von einem externen Triggersignal, hier S_WI als Signal der Erkennung einer Wintersituation durch eine vorgeschaltete Funktion, läuft erst eine systemspezifische Funktionserkennung, die den Schalter S_WI_ERK setzt. Eine Funktionspriorisierung entscheidet, ob sich diese Situation als prioritär gegen konkurrierende Situationen durchsetzt. Im einfachsten Fall von zwei möglichen Anforderern kann es sich um eine einfache Entscheidung bzw. Abfrage nach dem Schema "if (Bedingung), then (Fall A) else (Fall B)" handeln, die fest codiert wird. Wenn es zur Ausführung dieser Funktion kommt, wird durch gezielte Beeinflussung des Standardsignals ein wirksames Radmoment M_RAD_WI berechnet.

Im Folgenden werden die Schritte der Wintererkennung und der Ausführung genauer erläutert, wobei die systemspezifische Wintererkennung in der Abbildung von Figur 6 schematisch dargestellt ist. Die Abarbeitung der Wintererkennung erfolgt hier in Form eines Zustandsautomaten, der eine einfache Übergangsmatrix besitzt. Der Übergang aus einem Zustand kann nur in einen möglichen Folgezustand erfolgen. Die Zustände sind in Z_WI_ERK bekannt gegeben. Hier: Kein Winter (Z_WI_ERK = 0) -> Winter Einstieg (Z_WI_ERK = 1)-> Winter Aktiv (Z_WI_ERK = 2) -> Winter Ausstieg (Z_WI_ERK = 3) -> Kein Winter (Z_WI_ERK = 0) -> usw.. Dabei muss in dieser Ausführungsform jeder Zustand in einer sich stetig wiederholenden Schleife durchlaufen werden, ein Wintereinstieg kann nicht unterbrochen werden. Erst in dem Zustand "Winter Aktiv" kann ein Ausstieg beginnen. Während der Zustände "Winter Einstieg" und "Winter Ausstieg" wird berechnet, wie viel Prozent der applizierbaren Einstiegs- bzw. Ausstiegszeit abgelaufen sind. Ein jeweiliges Ergebnis wird entsprechend als T_WI_EINNORM und T_WI_AUSNORM ausgegeben.

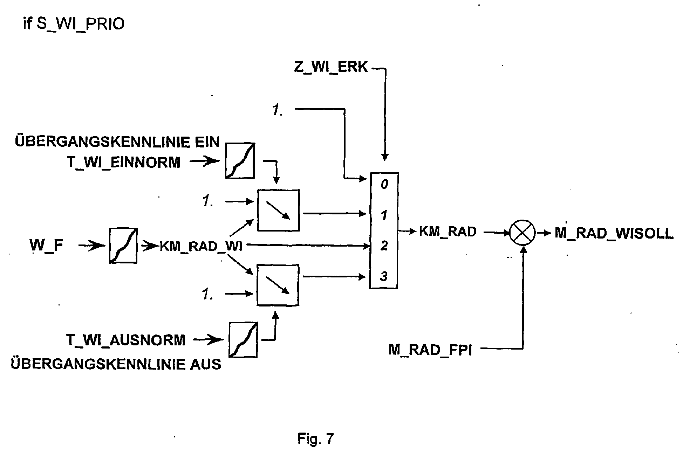

Die Ausführung der Wintererkennung erfolgt wie in der Abbildung von Figur 7 dargestellt. Die Priorisierung ist bereits abgeschlossen und die entsprechende Funktionalität kann abgearbeitet werden, d.h. das Standardmoment M_RAD_FPI, das eine Momenteninterpretation des Fahrerwunsches W_FP darstellt, wird über den Faktor KM_RAD beeinflusst. Entsprechend einer jeweiligen Stellung des Fahrpedals oder im allgemeinen Fall eines beliebigen Zustandes wird in einer Kennlinie ein fahrpedalabhängiger Reduktionsfaktor nachgeschlagen, hier ein Faktor KM_RAD_WI. Mit dem fahrpedalabhängigen Reduktionsfaktor wird die Standardvorgabe M_RAD_FPI bei erkannter Bedingung, hier durch Z_WI_ERK dargestellt, beeinflusst. Im Zustand "Kein Winter Aktiv", also Z_WI_ERK = 0, wird das Standard Moment hier M_RAD_FPI mit dem Faktor 1 bewertet, also unbeeinflusst durchgelassen. Im Zustand "Winter Aktiv", Z_WI_ERK = 2, erfolgt die Bewertung durch den Faktor KMRAD_WI. In den beiden Übergangszuständen "Winter Einstieg" mit Z_WI_ERK = 1 und "Winter Ausstieg" mit Z_WI_ERK = 3 erfolgt jeweils die Berechnung eines Bewertungsfaktors KM_RAD gemäß vorgegebener Übergangsfunktionen ÜBERGANGSKENNLINIE EIN und ÜBERGANGSKENNLINIE AUS. Diese beiden Kennlinien bestimmen frei applizierbar, welcher Prozentsatz des Übergangs nach dem entsprechenden zeitlichen Prozentsatz bereits erfolgt ist. Es sind stetige Kennlinien, die den Bereich 0..1 auf 0..1 abbilden. Die Ergebnisgröße einer x-ten Berechnung, hier M_RAD_WISOLL, kann nun an die zu stellende Einheit anstelle eines Standardwertes oder eines konkreten Vorgabewertes ausgegeben und schließlich zur Anpassung eines Fahrerwunsches M_RAD_FPI an eine winterliche Straßensituation umgesetzt werden. In abgewandelter Weise kann daraus auch eine Anti-Schlupf-Regelung beispielsweise für Reibkoeffizienten zwischen Radreifen und verschiedenen Straßenbelägen im Sommer oder Regen etc. gebildet werden.

Damit kann eine zuverlässige Funktion einer Momentenstellung bei einer Vielzahl von Anforderern und mithin eine einwandfreie Motorfunktion bei gemindertem Aufwand in Entwurf und Planung gegenüber bekannten Verfahren und Vorrichtungen sichergestellt werden. Ein erfindungsgemäßes Verfahren und eine dementsprechende Vorrichtung weisen damit hinsichtlich ihrer Flexibilität in der Anpassung auf eine fast beliebig große Anzahl von Anforderern und dementsprechend vielen Übergänge zwischen angeforderten Momenten gegenüber bekannten Verfahren erhebliche Vorteile auf. So ist eine beliebig einstellbare Zeit für die Dauer von n Übergängen x (x≤n-1) ->y (y≤n-1) eines Übergangs einstellbar. Durch diese Möglichkeit können schnelle Übergänge im Hinblick auf Sicherheitsaspekte und langsamere Übergänge zur Schaffung eines verbesserten Fahrkomforts jeweils erkannt und optimal berücksichtigt werden. Ferner kann eine Übergangskennlinie für den Übergang eines zu x gehörenden Momentes auf ein zu einer Anforderung y gehörenden Moments frei vorgegeben werden. Damit ist eine Auswahl von einer jeweiligen Fahrsituation entsprechenden Übergangskurven zwischen verschiedenen Momentenanforderungen möglich, die hinsichtlich Sicherheit, Komfort und auch Ökonomie ausgewogen einstellbar ist.

Durch die Erfindungen wird die bisher in der Motorsteuerung dargestellte Priorisierung entzerrt. Zudem wird die Momentenanforderung an die Antriebsmaschine vereinheitlicht und standardisiert. Dadurch kann die Entwicklung einer jeweiligen Steuerung für eine gesamte Motor-Getriebeeinheit auf einem hohen qualitativen Niveau beschleunigt werden. Durch die Reduzierung der Schnittstellen an die Steuereinheit für die Motor-Getriebe-Einheit wird die Komplexität einer Koordination in der Entwicklung wieder sicher beherrschbar, so dass eine leichte Berücksichtigung weiterer Momentenanforderungen an die Antriebsaggregatssteuerung ermöglicht wird. Dies kann vorteilhafterweise ohne Softwareänderung in der Steuerung des Antriebsaggregats geschehen, was den Entwicklungsprozess beschleunigt und die Komplexität auf einem geforderten hohen Qualitätsniveau beherrschbar macht.
Die vorstehend beschriebene Ausführungsform zeigt ein Spiel für die allgemeine Verwendbarkeit dieser Funktionalität.

Das strenge Abarbeitungsschema kann auf viele Bereiche angewendet werden, auch wenn es sich lediglich um zwei Anforderer handelt die einander ausschließen. Das anhand der Winterfunktion dargestellte Abarbeitungsschema kann überall dort eingesetzt werden, wo in einer Steuerung oder Regelung eine Abhängigkeit eines äußeren Triggersignals eine Signalbeeinflussung bewirkt und zudem eine im Wesentlichen freie Applizierbarkeit gefordert ist.

Im Rahmen der Beschreibung der vorliegenden Erfindung wurden folgende Bezeichnungen und Abkürzungen verwendet:
- CTRL: elektronische Steuerung / Momentensteller
- G: Getriebeeinheit
- KM_RAD: Faktor
- KM_RAD_WI: fahrpedalabhängiger Reduktionsfaktor
- M: Antriebsmaschine / Motor
- MASTER: erfindungsgemäße Funktionseinheit
- M_RAD_FPI: Basiswert der Momentenanforderung
- M_RAD_WI: durch eine Winterfunktion modifizierter Radmomentenwunsch
- M_RAD_ACC: durch priorisierte Anforderung modifizierter Momentenwunsch
- M_PROZENT: prozentual abgelaufener Momentenanteil
- M_RAD_VEKT: Radmomentenvektor
- M_RAD_SOLL: aktueller Soll-Wert (Vorgabe) des Radabtriebsmomentes
- M_RAD_SOLL NEU: neuer Soll-Wert
- M_RAD_SOLL ALT: alter Soll-Wert
- M_RAD_FPI: Standardmoment (Vorgabe nach Fahrpedal-Interpretation)
- M_RAD_WI: wirksames Radmoment bei Winterfunktion
- Mx: Matrix
- n: Anzahl einzelner Anforderungen
- R: Fahrzeugrad
- RMK: Radmomentenknoten
- S_XY: externe Momentenanforderung anderer Systeme
- S_XX: Anforderungen aus Fahr- urid Umweltsituationen
- S_ACC: Momentenanforderung ACC
- S_WI: Wintererkennung
- S_WI_ERK: Schalter für eine vom Master erkannte Wintersituation
- S_ZZ_PRIO: durchgesetzte Situation
- S_ZZ_PRIO ALT: alter Wert einer vorhergehend durchgesetzten Situation
- S_WI_PRIO: Winterfunktion als durchgesetzte Situation
- S_ACC_PRIO: erkannte und priorisierte Momentenanforderung des ACC
- tₘ: Dynamik einer Momentenanforderung
- T_PROZENT: prozentual abgelaufener Zeitanteil
- T_UEBERGANG: für den speziellen Übergang applizierbare Zeit
- T_WI_EINNORM: abgelaufene Prozente der applizierbaren Einstiegszeit
- T_WI_AUSNORM: abgelaufene Prozente der applizierbaren Ausstiegszeit
- W_FP: Fahrpedalinterpretation, Fahrerwunsch
- Z_PRIO_VEKT: Zustandsmerker, Stelle in M_RAD_VEKT
- Z_VEKT_ALT: Prioritätszustand der Historie, Stelle in M_RAD_VEKT
- Z_WI_ERK: erkannte Bedingung bei Winterfunktion

## Patentansprüche

1. Verfahren zur Regelung und/oder Steuerung einer Motor-Getriebeeinheit (M, G) in einem Kraftfahrzeug, das eine konkrete Momentenanforderung an Antriebsrädern (R) des Kraftfahrzeuges durch eine Steuerung oder Regelung von Sollwerten an den Motor (M) und/oder einer Übersetzung einer Getriebeeinheit (G) realisiert, wobei eine Berechnung einer aus einer vorgegebenen Anzahl (n) von Anforderern (M_XX, ..., M_XY) jeweils in der Motor-Getriebeeinheit (M, G) umzusetzenden Momentenvorgabe (M_RAD_SOLL) erfolgt und die Momentenvorgabe (M_RAD_SOLL) an eine elektronische Steuerung oder Regelung (CTRL) gerichtet wird, wobei die Berechnung der Momentenvorgabe (M_RAD_SOLL) in einer getrennten, der Steuerung oder Regelung (CTRL) übergeordneten Funktionseinheit (MASTER) durchgeführt wird, wobei die Realisierung einer solchen Funktionseinheit (MASTER) erfolgt, indem die Anforderungen (S_WI, S_XX, ..., S_AC, S_XY) bzw. die Anforderer (M_XX, ..., M_XY) durch eine Priorisierungsstufe (PRIO) derart gefiltert werden, wobei sich letztlich nur eine Anforderung bzw. nur ein Anforderer durchsetzt, die bzw. der als aktuell durchgesetzte Situation (S_ZZ_PRIO) abgespeichert wird, wobei zudem die vorhergehend durchgesetzte Situation (S_ZZ_PRIOALT) abgespeichert bleibt, wobei zumindest die der aktuell durchgesetzten Situation (S_ZZ_PRIO) zugeordnete Anforderung (z. B. S_XX) sowie die der vorhergehend durchgesetzten Situation (S_ZZ_PRIOALT) zugeordnete Anforderung (z. B. S_XY) in vergleichbare, vorzugsweise für die Realisierung der Anforderungen (S_XX; S_XY) jeweils benötigte Momentenwerte (vorzugsweise in die Radmomente M_RAD_XX; M_RAD_XY) aufgearbeitet werden, wobei bei Auftreten eines Prioritätenwechsels, der bei Ungleichheit der aktuell durchgesetzten Situation (S_ZZ_PRIO) mit der vorhergehend durchgesetzten Situation (S_ZZ_PRIOALT) erkannt wird, ein Verfahren zur Realisierung eines Überganges von dem der vorhergehend durchgesetzten Situation (S_ZZ_PRIOALT) zugeordneten und vorgegebenen Momentenwert (M_RAD_SOLL=M_RAD_XY) zu dem der aktuell durchgesetzten Situation (S_ZZ_PRIO) zugeordneten und vorgegebenen Momentenwert (M_RAD_SOLL=M_RAD_XX) angewendet wird und wobei die Momentenanforderungen (M_RAD_FPI, M_RAD_XX, M_RAD_WI,..., M_RAD_XY, M_RAD_ACC) in einem Vektor bzw. einen linearen Speicher (M_RAD_VEKT) abgelegt werden.

2. Verfahren nach Anspruch 1,
**dadurch gekennzeichnet, dass** die Realisierung einer solchen Funktionseinheit (MASTER) erfolgt, indem die Verfahrensschritte
einer vorangestellten Berücksichtigung von Momentenanforderungen anderer fahrzeug-interner Systeme (S_XY) sowie einer Berücksichtigung von mehreren Momentenanforderungen, die sich aufgrund verschiedener Umwelt- und Fahrsituationen (S_XX) ergeben,
einer nachfolgender Aufarbeitung der externen und internen Momentenanforderungen in Radmomente (M_RAD_XY, M_RAD_XX) sowie
schließlich einer Priorisierung der Anforderungen und einer Ausgabe einer Momentenanforderung bzw. Momentenvorgabe (M_RAD_SOLL) durchlaufen werden.

3. Verfahren nach einem oder mehreren der vorhergehenden Ansprüche,
**dadurch gekennzeichnet, dass** vorbereitend alle internen und/oder externen Anforderer in Form von Fahrsituationen (S_XX, S_WI) und/oder Momentenanforderungen anderer Systeme (S_XY, S_ACC) erkannt und ihrer jeweiligen Momentenanforderungen (M_RAD_FPI, M_RAD_XX, M_RAD_WI,..., M_RAD_XY, M_RAD_ACC) bestimmt werden.

4. Verfahren nach dem vorhergehenden Anspruch,
**dadurch gekennzeichnet, dass** die Momentenanforderungen (M_RAD_FPI, M_RAD_XX, M_RAD_WI,..., M_RAD_XY, M_RAD_ACC) erkannter internen und/oder externen Anforderer gespeichert werden,

5. Verfahren nach einem oder mehreren der vorhergehenden Ansprüche,
**dadurch gekennzeichnet, dass** Momentenanforderungen bestimmter Fahrsituationen oder anderer Momenten anfordernder Systeme (S_XX, S_XY) durch eine Priorisierungsstufe (PRIO) derart gefiltert werden, dass sich letztlich nur eine Situation (S_ZZ_PRIO) durchsetzt bzw. priorisiert wird.

6. Verfahren nach einem oder mehreren der vorhergehenden Ansprüche,
**dadurch gekennzeichnet, dass** die Momentenanforderung einer priorisierten Situation (S_ZZ_PRIO) durch einen Zustandsmerker (Z_PRIO_VEKT) vermerkt wird.

7. Verfahren nach einem oder mehreren der vorhergehenden Ansprüche,
**dadurch gekennzeichnet, dass** ein entsprechender Prioritätszustand der Historie (S_ZZ_PRIOALT) durch einen Zustandsmerker (Z_VEKT_ALT) abgespeichert wird.

8. Verfahren nach dem vorhergehenden Anspruch,
**dadurch gekennzeichnet, dass** eine priorisierte Momentenanforderung (Z_PRIO_VEKT) und ein Prioritätszustand der Historie (Z_VEKT_ALT) als Zeiger an entsprechende Stellen in dem Speicher (M_RAD_VEKT) bestimmt werden.

9. Verfahren nach einem oder mehreren der vorhergehenden Ansprüche,
**dadurch gekennzeichnet, dass** während laufender Regelvorgänge zwischen dem Auftreten eines Prioritätenwechsels und einem Fortschreiten des jeweiligen Regelvorganges ohne Prioritätenwechsel unterschieden wird.

10. Verfahren nach dem vorhergehenden Anspruch,
**dadurch gekennzeichnet, dass** im Fall eines Prioritätenwechsels ein Verfahren zur Realisierung eines Übergangs angewendet wird, durch das ein stetiger Übergang in der Momentenvorgabe geschaffen wird, der abhängig von einer Zeit (T_UEBERGANG), einer jeweiligen Differenz der Niveaus eines alten und eines neuen Vorgabe Moments und/oder einem neuen Vorgabe-Moment oder einer erkannten und jeweils priorisierten Situation (Z_PRIO_VEKT, Z_PRIO_VEKTALT) bestimmt wird.

11. Verfahren nach einem oder mehreren der vorhergehenden Ansprüche,
**dadurch gekennzeichnet, dass** im Fall eines Überganges eine für den speziellen Übergang applizierbare Zeit (T_UEBERGANG) nachgeschlagen und eingeregelt wird, insbesondere unter Vorgabe von Werten aus einer Matrix regelt wird, insbesondere unter Vorgabe von Werten aus einer Matrix (Mx).

12. Verfahren nach einem oder mehreren der vorhergehenden Ansprüche,
**dadurch gekennzeichnet, dass** die Form einer Übergangskurve von einer erkannten und priorisierten Situation oder Momentenanforderung abhängig ausgewählt wird.

13. Vorrichtung zur Steuerung und/oder Regelung einer Motor-Getriebeeinheit (M, G) in einem Kraftfahrzeug, das zur Bereitstellung einer Momentenanforderung an Antriebsrädern (R) des Kraftfahrzeuges über eine Regelungsmöglichkeit an dem Motor (M) und/oder an der Getriebeeinheit (G) verfügt, wobei in der Vorrichtung zur Durchführung eines Verfahrens nach einem oder mehreren der vorhergehenden Ansprüche der Steuerung oder Regelung (CTRL) eine Funktionseinheit (MASTER) vorgeschaltet ist, der zur Berechnung einer umzusetzenden Momentenvorgabe (M_RAD_SOLL) aus einer vorgegebenen Anzahl (n) von Anforderern (M_XX,.... M_XY) ausgebildet ist, und wobei eine Matrix (Mx) zur Ausgabe einer für einen Übergang einer prioritären Anforderung applizierbare Zeit (T_UEBERGANG) und/oder eine jeweilige Kurvenform vorgesehen ist.

14. Vorrichtung nach dem vorhergehenden Anspruch,
**dadurch gekennzeichnet, dass** ein Speicher (M_RAD_VEKT) zum Ablegen der Momentenanforderungen (M_RAD_FPI, M_RAD_XX, M_RAD_WI,...., M_RAD_XY, M_RAD_ACC) erkannter Anforderer vorgesehen ist.

15. Vorrichtung nach einem oder mehreren der vorhergehenden Ansprüche,
**dadurch gekennzeichnet, dass** eine Priorisierungsstufe (PRIO) zur Filterung und oder Gewichtung aller erkannten Fahrsituationen oder anderer, ebenfalls Momenten anfordernder Systeme (S_XX. S_XY, ...) vorgesehen ist.

## Claims

1. A method for the regulation and/or control of an engine transmission unit (M, G) in a motor vehicle, which method issues a specific torque request to driving wheels (R) of the motor vehicle by controlling or regulating desired values for the engine (M) and/or a ratio in a transmission unit (G), wherein a calculation of a torque default (M_WHEEL_DESIRED) from a given number (n) of requesters (M_XX, ..., M_XY) for implementation, in each case, in the engine transmission unit (M, G) takes place and the torque default (M_WHEEL_DESIRED) is sent to an electronic control or regulation means (CTRL), wherein the calculation of the torque default (M_WHEEL_DESIRED) is carried out in a separate functional unit (MASTER), which is superordinate to the control or regulation means (CTRL), wherein a functional unit (MASTER) of this type is produced in that the requests (S_WI, S_XX, ..., S_AC, S_XY) or the requesters (M_XX, ..., M_XY) are filtered in such a way by a prioritisation stage (PRIO), wherein only one request or one requester is ultimately enforced that is stored as being a currently enforced situation (S_ZZ_PRIO), wherein the previously enforced situation (S_ZZ_PRIOOLD) also continues to be stored, wherein at least the request (for example, S_XX) associated with the currently enforced situation (S_ZZ_PRIO) and the request (for example, S_XY) associated with the previously enforced situation (S_ZZ_PRIOOLD) are processed into comparable torque values (preferably into the wheel torques (M_WHEEL_XX; M_WHEEL_XY)), which are required, in each case, for carrying out the requests (S_XX; S_XY), wherein on occurrence of a change in priorities, which is detected when the currently enforced situation (S_ZZ_PRIO) is non-identical to the previously enforced situation (S_ZZ_PRIOOLD), a method for implementing a transition from the given torque value (M_WHEEL_DESIRED = M_WHEEL_XY) associated with the previously enforced situation (S_ZZ_PRIOOLD) to the given torque value (M_WHEEL_DESIRED = M_WHEEL_XY) associated with the currently enforced situation (S_ZZ_PRIO) is applied, and wherein the torque requests (M_WHEEL_FPI, M_WHEEL_XX, M_WHEEL_WI, ..., M_WHEEL_XY, M_WHEEL_ACC) are stored in a vector or a linear memory (M_WHEEL_VECT).

2. A method according to claim 1, **characterised in that** a functional unit (MASTER) of this type is produced **in that** the method steps of a prior consideration of torque requests from other vehicle-internal systems (S_XY) and a consideration of a plurality of torque requests occurring owing to various environmental and driving situations (S_XX), a subsequent processing of the external and internal torque requests into wheel torques (M_WHEEL_XX; M_WHEEL_XY), and finally a prioritisation of the requests and an issuing of a torque request or torque default (M_WHEEL_DESIRED) are carried out.

3. A method according to one or more of the preceding claims, **characterised in that**, in preparation, all of the internal and/or external requesters are detected in the form of driving situations (S_XX, S_WI) and/or torque requests from others systems (S_XY, S_ACC) and their respective torque requests (M_WHEEL_FPI, M_WHEEL_XX, M_WHEEL_WI, ..., M_WHEEL_XY, M_WHEEL_ACC) are determined.

4. A method according to the preceding claim, **characterised in that** the torque requests (M_WHEEL_FPI, M_WHEEL_XX, M_WHEEL_WI, ..., M_WHEEL_XY, M_WHEEL_ACC) of detected internal and/or external requesters are stored.

5. A method according to one or more of the preceding claims, **characterised in that** torque requests for specific driving situations or other systems (S_XX, S_XY) requesting torques are filtered by a prioritisation stage (PRIO) in such a way that ultimately only one situation (S_ZZ_PRIO) is enforced or prioritised.

6. A method according to one or more of the preceding claims, **characterised in that** the torque request for a prioritised situation (S_ZZ_PRIO) is recorded by a state-recording means (Z_PRIO_VECT).

7. A method according to one or more of the preceding claims, **characterised in that** a corresponding priority state of the history (S_ZZ_PRIOOLD) is stored by a state-recording means (Z_VECT_OLD).

8. A method according to the preceding claim, **characterised in that** a prioritised torque request (Z_PRIO_VECT) and a priority state of the history (Z_VECT_OLD) are determined as indicators at corresponding locations in the memory (M_WHEEL_VECT).

9. A method according to one or more of the preceding claims, **characterised in that** a distinction is drawn, during ongoing regulation processes, between the occurrence of a change in priorities and a continuation of the respective regulation process without a change in priorities.

10. A method according to the preceding claim, **characterised in that**, in the event of a change in priorities, a method for implementing a transition is applied, which method provides a continuous transition in the torque default that is determined as a function of a time (T_TRANSITION), a respective differential of the levels of an old and a new default torque, and/or of a new default torque or a detected and respectively prioritised situation (Z_PRIO_VECT, Z_PRIO_VECTOLD).

11. A method according to one or more of the preceding claims, **characterised in that**, in the event of a transition, a time (T_TRANSITION) applicable to the specific transition is referred to and adjusted, and, especially, is regulated given values from a matrix, especially given values from a matrix (Mx).

12. A method according to one or more of the preceding claims, **characterised in that** the form of a transition curve is selected as a function of a detected and prioritised situation or torque request.

13. A device for the control and/or regulation of an engine transmission unit (M, G) in a motor vehicle having, for supplying a torque request to driving wheels (R) of the motor vehicle, a regulation facility on the engine (M) and/or on the transmission unit (G), wherein, in the device for carrying out a method according to one or more of the preceding claims, a functional unit (MASTER), which is configured for calculating a torque default (M_WHEEL_DESIRED) for implementation, from a given number (n) of requesters (M_XX, ..., M_XY), precedes the control or regulation means (CTRL), and wherein a matrix (Mx) for issuing a time (T_TRANSITION) applicable to a transition of a priority request, and/or a respective curve form is provided.

14. A device according to the preceding claim, **characterised in that** a memory (M_WHEEL_VECT) is provided for storing the torque requests (M_WHEEL_FPI, M_WHEEL_XX, M_WHEEL_WI, ..., M_WHEEL_XY, M_WHEEL_ACC) of detected requesters.

15. A device according to one or more of the preceding claims, **characterised in that** a prioritisation stage (PRIO) is provided for filtering and/or weighting all of the detected driving situations or other systems (S_XX, S_XY, ...) also requesting torques.

## Revendications

1. Procédé pour la régulation et/ou la commande d'une bloc motopropulseur (M, G) dans un véhicule, qui réalise une demande de couple concrète sur les roues motrices (R) du véhicule automobile via une commande ou une régulation des valeurs de consigne au niveau du moteur (M) et/ou du rapport de transmission d'une unité d'engrenages (G), une instruction de couple (M_RAD_SOLL) à transposer à partir d'un nombre donné (n) de demandeurs (M_XX, ..., M_XY), respectivement dans le bloc motopropulseur (M, G), étant calculée et l'instruction de couple (M_RAD_SOLL) étant adressée à une commande ou une régulation électronique (CTRL), le calcul de l'instruction de couple (M_RAD_SOLL) étant effectué dans une unité fonctionnelle (MAITRE) séparée, de niveau supérieur à la commande ou à la régulation (CTRL), une telle unité fonctionnelle (MAITRE) étant réalisée, tandis que les demandes (S_WI, S_XX, ...,S_AC, S_XY) ou les demandeurs (M_XX, ...,M_XY) sont filtrés de telle manière par une étape d'attribution de la priorité (PRIO), dans lequel enfin s'impose une seule demande ou un seul demandeur, qui est enregistré comme situation effectivement imposée (S_ZZ_PRIO), la situation précédemment imposée (S_ZZ_PRIOALT) en outre restant en mémoire, au moins la demande associée (par exemple S_XX) à la situation effectivement imposée (S_ZZ_PRIO), ainsi que la demande associée (par exemple S_XY) à la situation précédemment imposée (S_ZZ_PRIOALT), étant traités à des valeurs de couple comparables, nécessaires de préférence pour la réalisation des demandes (S_XX ; S_XY) (de préférence aux couples appliqués sur une roue M_RAD_XX, M_RAD_XY), un procédé pour la réalisation d'une transition de la valeur de couple (S_ZZ_PRIOALT) pré-déterminée et associée à la situation précédemment imposée à la valeur de couple pré-déterminée et associée à la situation effectivement imposée (S_ZZ_PRIO) étant mis en oeuvre en cas de changement de priorité reconnu au niveau du déséquilibre entre la situation effectivement imposée (S_ZZ_PRIOALT) et la situation précédemment imposée (M_RAD_SOLL = M_RAD_XY) et les demandes de couple (M_RAD_FPI, M_RAD_XX, M_RAD_WI, ...., M_RAD_XY, M-RAD_ACC) étant consignées dans un vecteur ou une mémoire linéaire (M_RAD_VEKT).

2. Procédé selon la revendication 1,
**caractérisé en ce qu'**
une telle unité fonctionnelle (MAITRE) est réalisée si les étapes de procédé passent par :
- une prise en compte préalable de demandes de couple d'autres systèmes internes au véhicule (S_XY), ainsi qu'une prise en compte de plusieurs demandes de couple, qui résultent de différentes situations d'environnement et de conduite (S_XX),
- une mise à jour subséquente des demandes de couple externes et internes dans les couples appliqués sur une roue (M_RAD_XY, M_RAD_XX), et
- une attribution de priorité aux demandes et une émission d'une demande de couple ou d'une instruction de couple (M_RAD_SOLL).

3. Procédé selon l'une ou plusieurs des revendications précédentes,
**caractérisé en ce que**
de manière préliminaire, tous les demandeurs internes et/ou externes sont reconnus sous la forme de situations de conduite (S_XX, S_WI) et/ou de demandes de couple d'autres systèmes (S_XY, S_ACC) et que leurs demandes de couple respectives (M_RAD_FPI, M_RAD_XX, M_RAD_WI,...., M_RAD_XY, M_RAD_ACC) sont déterminées.

4. Procédé selon la revendication 3,
**caractérisé en ce que**
les demandes de couple (M_RAD_FPI, M_RAD_XX, M_RAD_WI,...., M_RAD_XY, M_RAD_ACC) de demandeurs internes et/ou externes reconnus sont enregistrées.

5. Procédé selon l'une ou plusieurs des revendications précédentes,
**caractérisé en ce que**
les demandes de couple de situations de conduite déterminées ou d'autres systèmes demandant des couples (S_XX, S_XY) sont filtrées par une étape d'attribution de priorité (PRIO) de telle sorte que, finalement, une seule situation (S_ZZ_PRIO) s'impose ou est mise en priorité.

6. Procédé selon l'une ou plusieurs des revendications précédentes,
**caractérisé en ce que**
la demande de couple d'une situation mise en priorité (S_ZZ_PRIO) est marquée par un marqueur d'état (Z_PRIO_VEKT).

7. Procédé selon l'une ou plusieurs des revendications précédentes,
**caractérisé en ce qu'**
un état de priorité correspondant de l'historique (S_ZZ_PRIOALT) est enregistré par un marqueur d'état (Z_VEKT_ALT).

8. Procédé selon la revendication précédente,
**caractérisé en ce qu'**
une demande de couple mise en priorité (Z_PRIO_VEKT) et un état de priorité de l'historique (Z_VEKT_ALT) sont déterminés comme indicateurs à des endroits correspondants dans la mémoire (M_RAD_VEKT).

9. Procédé selon l'une ou plusieurs des revendications précédentes,
**caractérisé en ce que**
pendant les opérations de régulation en cours, une distinction est faite entre l'apparition d'un changement de priorité et une continuation de l'opération de régulation correspondante sans changement de priorité.

10. Procédé selon la revendication 9,
**caractérisé en ce qu'**
en cas de changement de priorité, on applique un procédé pour la réalisation d'une transition, par lequel une transition continue est créée dans l'instruction de couple, cette transition étant déterminée en fonction d'un temps (T_UEBERGANG), d'une différence respective de niveau entre un ancien et un nouveau couple d'instruction, et/ou d'un nouveau couple d'instruction ou d'une situation reconnue et respectivement mise en priorité (Z_PRIO-VEKT, Z_PRIO_VEKTALT).

11. Procédé selon l'une ou plusieurs des revendications précédentes,
**caractérisé en ce qu'**
en cas de transition, un temps applicable à la transition spéciale (T_UEBERGANG) est recherché et réglé, et réglé en particulier par indication de valeurs prises dans une matrice, en particulier par indication de valeurs prises dans une matrice (Mx).

12. Procédé selon l'une ou plusieurs des revendications précédentes,
**caractérisé en ce que**
la forme d'une courbe de transition est choisie en fonction d'une situation ou d'une demande de couple reconnue et mise en priorité.

13. Dispositif pour la commande et/ou la régulation d'un bloc motopropulseur (M, G) dans un véhicule automobile qui dispose d'une possibilité de régulation au niveau du moteur (M) et/ou de l'unité d'engrenages (G) pour la mise à disposition d'une demande de couple au niveau des roues motrices (R) du véhicule automobile, une unité fonctionnelle (MAITRE) étant connectée en amont dans le dispositif servant à la réalisation d'un procédé de commande ou de régulation (CTRL), selon l'une ou plusieurs des revendications précédentes formée d'un nombre prédéterminé de demandeurs (M_XX, ..., M_XY) pour le calcul d'une instruction de couple à transposer (M_RAD_SOLL), et une matrice (Mx) étant prévue pour l'émission d'un temps applicable à une transition d'une demande prioritaire (T_UEBERGANG) et/ou une forme de courbe respective.

14. Dispositif selon la revendication 13,
**caractérisé par**
une mémoire (M_RAD_VEKT) pour classer les demandes de couple (M_RAD_FPI, M_RAD_XX, M_RAD_WI,...., M_RAD_XY, M_RAD_ACC) des demandeurs reconnus.

15. Dispositif selon l'une ou plusieurs des revendications précédentes,
**caractérisé par**
une étape de mise en priorité (PRIO) pour le filtrage et/ou la pondération de toutes les situations de conduite reconnues ou d'autres systèmes qui demandent également des couples (S_XX, S_XY).
